# EUROPEAN PATENT SPECIFICATION

(11) **EP 4 048 580 B1**
(45) Date of publication and mention of the grant of the patent: **28.08.2024**
(21) Application number: 20800249.3
(22) Date of filing: 21.10.2020
(51) Int. Cl.: B60L 50/20, B60K 17/04, B60K 7/00, B62M 6/65, B62K 25/00

(54) **A DRIVE SYSTEM FOR A SIDE MOUNTED CYCLE WHEEL**
ANTRIEBSSYSTEM FÜR EIN SEITLICH MONTIERTES FAHRRADRAD
SYSTÈME D'ENTRAÎNEMENT POUR UNE ROUE DE CYCLE À MONTAGE LATÉRAL

(30) Priority: 22.10.2019 GB 201915272
(43) Date of publication of application: 31.08.2022
(73) Proprietor: Karbon Kinetics Limited, Chessington, Surrey KT9 2NY (GB)
(72) Inventor: THORPE, Richard, Ditton KT7 0QP (GB)
(74) Representative: Potter Clarkson
(86) International application number: PCT/GB2020/052648
(87) International publication number: WO 2021/079113

(56) References cited:
- WO-A1-2009/027683
- JP-A- 2003 028 254
- US-A1- 2007 078 035
- US-A1- 2019 084 407

## Description

### BACKGROUND

Current state of the art electric bicycles come fitted with an electric motor that drives the front wheel or the rear wheel or even the pedals. These motors come fitted with a reduction gearbox or chain or belt drive system that reduces the output rpm of the motor shaft to optimally match the speed of the pedals or the wheels of the bicycle when the bicycle is ridden at normal speed. In the case of a reduction gearbox with gears, the planetary arrangement of gears is most often used and is well understood.

In the case of electric bicycles with motor gearboxes fitted directly to the front wheel, the motor gearbox is mounted within the hub of the front bicycle wheel. This hub is generally similar to traditional motor-less front wheel hubs in that it is fitted with an axle suited for mounting to a double leg fork and the hub has holes in the hub flanges to accept the spokes of the bicycle wheel. The axle is rigidly mounted to the front fork ends and is able to transmit torque from the motor to the bicycle fork through its connection to the centre axle, thereby enabling the rider and bicycle to accelerate under motor power.

However, some bicycles and electric bicycles have wheels that are mounted from only one side. A distinct benefit of this single side mounted wheel arrangement is that the user can change the tyre if it is flat without removing the wheel from the bicycle, such as has to be done with a traditional double side mounted wheel design bicycle. However, a drawback of the single side mounted front wheel design is that due to the cantilevered mounting arrangement, there exists a twisting force moment on the front axle. As such, single side mounted front wheels require front axles that are significantly larger in diameter than axles found on a traditional double side mounted design.

When it comes to mounting an electric motor and reduction gearbox to the front wheel of a single side mounted wheel bicycle, it is simply not possible to adapt a traditional double side mounted electric bicycle front hub motor to be fixed to the front fork only from one side because the through axle is not of sufficiently large diameter to withstand the cantilevered bending force. If the shaft is increased in diameter to account for the cantilevered bending force, the motor and planetary gears and hub become excessively larger in diameter and higher in weight to the point of being undesirable and commercially not viable. This is because the sun gear of front hub electric drives is cut into the axle and if the diameter of the axle is increased, the planet gears and ring gears of the planetary gearbox need to increase in size also in order to maintain the same gear reduction ratio.

Some existing side mounted front wheel electric motor drives house the planetary gears and motor within a large diameter front shaft and mounted on the outer diameter of the shaft are two rotary bearings that facilitate the front hub and wheel to rotate. The motor drive is connected to this outer wheel hub through an end of the larger oversized axle with a one way type bearing coupling. This arrangement has the limitation of requiring that the sun, planet, and ring gears be relatively small, and the drawback of this design is that these small gears can be limited in their ability to handle sufficiently high torques.

Designers can overcome this by using high strength materials, however, the drawback of this solution is that noise levels of the gears are higher. Another drawback of these designs is that the rotary bearings that are mounted on the oversized shaft tend to be large and heavy and expensive relative to the cost base of electric bicycle components. This is because the shaft diameter has to be large enough to contain within it the planetary gear drive. This is especially apparent when the planetary gear drive is designed to exhibit low noise which typically requires the use of plastic gears and in order for those gears to be able to transmit sufficient torque, they need to be sufficiently large in diameter. Consequently, existing side mounted front electric motor drives can be made either to be compact and light but noisy, or quiet, but large, heavy and expensive due to the large oversized bearings required to fit about the planetary gearbox.

Another drawback of existing single side mounted front hub electric drives is that in an effort to maintain the shortest lateral width of the front motor drive, the distance between the two front hub bearings is generally constrained between the single sided fork mounting arm and the wheel spokes. If a disk brake is used, this distance is yet further constrained and the result can be that there is a sub-optimal wheel hub bearing spacing such that the front wheel can have higher than acceptable runout and wobble or require excessive precision and cost to maintain acceptable runout and wobble. WO 2009/027683 A1 discloses a drive system for a side mounted cycle wheel, comprising:a wheel hub for mounting the side mounted wheel and a motor drive for driving the side mounted wheel, the motor drive comprising an electric motor.

### SUMMARY OF THE INVENTION

According to a fist aspect of the invention, there is provided a drive system for a side mounted wheel, comprising a wheel hub for mounting the side mounted wheel; a motor drive for driving the side mounted wheel, the motor drive comprising an electric motor and a planetary gear reduction assembly positioned at least partially within the wheel hub and comprising one or more planetary gears; and, a rotary wheel hub bearing rotatably coupling the wheel hub to the motor drive, wherein the rotary wheel hub bearing is positioned laterally between the electric motor and the planetary gears.

The hub bearing and shaft mounting arrangement of present invention addresses drawbacks of current side mounted wheel drive electric vehicle designs. Compared to known arrangements, which instead have a rotary bearing positioned around an outer circumference of a planetary gearbox, positioning the rotary wheel hub bearing in the region between the planetary gear system and the motor components facilitates the use of reasonably sized hub bearings whilst still allowing a sufficiently large diameter planetary gearbox design able to use quiet plastic gearing. This configuration makes use of the space available around the naturally small diameter motor pinion sun gear diameter, which also has the benefit of increasing the distance between the front wheel hub bearings to provide a more optimal spacing.

In use, a side mounted wheel can be coupled to the wheel hub, for example using a threaded connection or similar, such that the wheel hub is coaxial with a rotation axis of the wheel.

The planetary gear reduction assembly may be entirely cased within the wheel hub, or part of it could be exposed.

The motor may be connected to a battery or similar power source.

Preferably, the rotary wheel hub bearing is coaxial with a wheel rotation axis of the side mounted wheel.

Preferably, an inner diameter of the rotary wheel hub bearing is smaller than an outer diameter of a stator of the electric motor. Optionally, an outer diameter of the rotary wheel hub bearing may also be smaller than an outer diameter of a stator of the electric motor.

Preferably, an inner diameter of the rotary wheel hub bearing is smaller than an outer diameter of the planetary gear reduction assembly. Optionally, an outer diameter of the rotary wheel hub bearing may also be smaller than an outer diameter of the planetary gear reduction assembly.

Preferably, an inner diameter of the rotary wheel hub bearing is smaller than an outer diameter a planetary input flange of the planetary gear reduction assembly. Optionally, an outer diameter of the rotary wheel hub bearing may also be smaller than an outer diameter a planetary input flange of the planetary gear reduction assembly.

Preferably, the motor drive further comprises a planetary input flange and a motor output flange coaxial with a wheel rotation axis of the side mounted wheel, and the planetary input flange and the motor output flange share a common interface with the internal surface of the rotary wheel hub bearing.

Optionally, the rotary wheel hub bearing may be a first rotary wheel hub bearing, and the drive system may further comprise a second rotary wheel hub bearing rotatably coupling the wheel hub to the motor drive.

Preferably, the second rotary wheel hub bearing is positioned on an opposing side of the planetary gear reduction assembly to the first rotary wheel hub bearing.

According to a second aspect of the invention, there is provided a cycle comprising a side mounted wheel mounted to the wheel hub of the drive system of the first aspect.

Optionally, the side mounted wheel may be a front side mounted wheel. Alternatively, the side mounted wheel may be a rear side mounted wheel.

Optionally, the cycle is a pedal driven cycle.

According to a third aspect of the invention, there is provided an electric vehicle comprising a side mounted wheel mounted to the wheel hub of the drive system of the first aspect.

Optionally, the electric vehicle may be an electric scooter.

### BRIEF DESCRIPTION OF DRAWINGS

Examples of the present invention will now be described in detail with reference to the accompanying drawings, in which:
Figure 1 shows a side view of a belt drive bicycle with side mounted wheels;
Figure 2 is a right side perspective view showing the front fork assembly and a front motor assembly; and,
Figure 3 shows a vertical cross section view of the front motor assembly of Figures 1 and 2.

### DETAILED DESCRIPTION

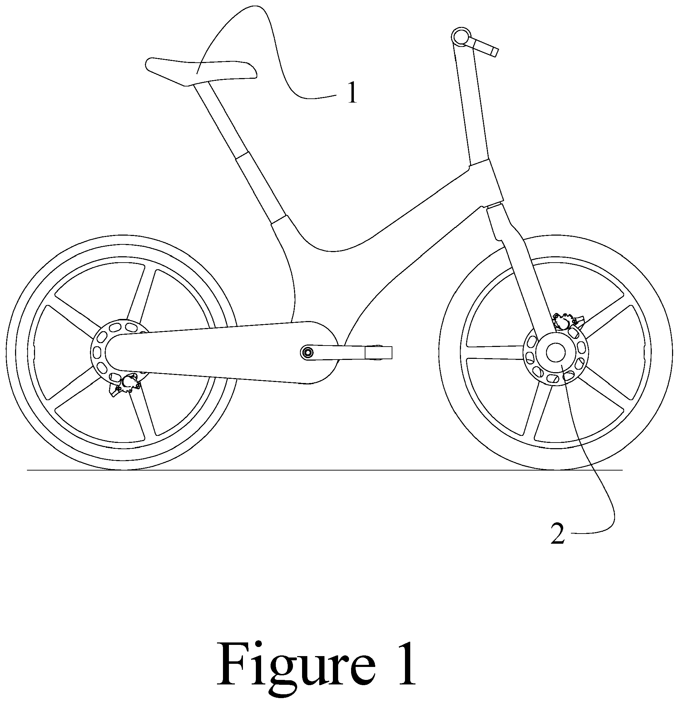

Figure 1 shows a preferred embodiment of a single side mounted front motor drive bicycle 1 with a front side mounted motor assembly 2.

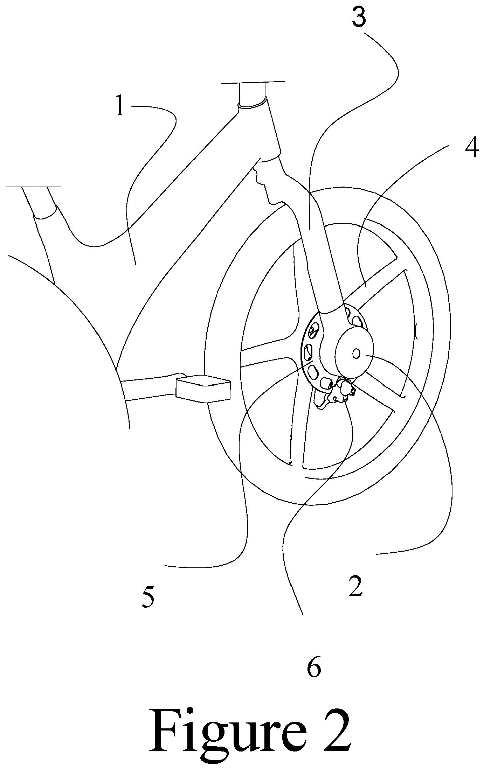

Figure 2 shows an alternative view of the single side mounted front motor drive bicycle 1 of Figure 1 having a front single sided cantilevered fork member 3 facilitating the rigid mounting of the front side mounted motor assembly 2 and a front wheel brake calliper 6 for slowing a front wheel disk brake rotor 5 which is rigidly connected to a front single side wheel assembly 4.

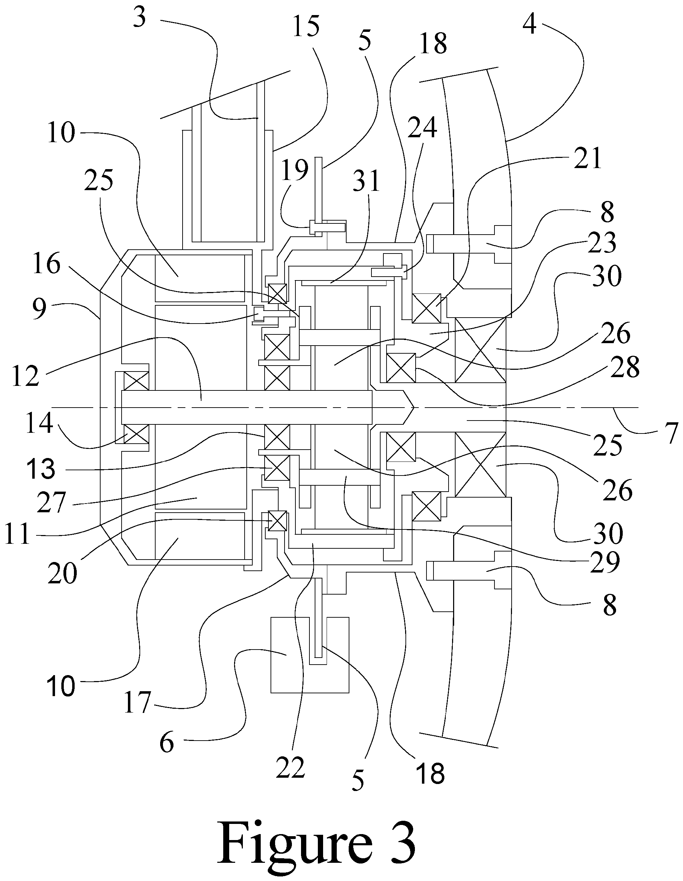

Figure 3 is a vertical cross section front view of the front side mounted motor assembly 2 of Figures 1 and 2 through the front wheel rotation axis 7. The front side mounted motor assembly 2 comprises a front motor output housing 15 mounted by glue, press fitting, screw or bolt type fastener to the front single sided cantilevered fork member 3 able to receive a front motor housing 9.

The front motor housing 9 is formed to house a front motor stator 10 and a front motor pinion outer bearing 14 which rotatably supports a front motor pinion 12 which is rigidly attached to a front motor magnet rotary 11. The interaction and control of the front motor stator 10 with respect to the front motor magnet rotary 11 is of the well-known and understood electric machine variety.

The front motor pinion 12 is rotatably supported by the front motor pinion outer bearing 14 and a front motor pinion inner bearing 13 which is rotatably mounted to a front motor planet carrier 25. The front motor planet carrier is in turn supported by a front motor planetary gearbox input flange 22 through a front motor planet carrier inner bearing 27. The front motor planetary gearbox input flange 22 is rigidly attached to the front motor output housing 15 with a plurality of front motor fasteners 16.

The front motor planetary gearbox input flange 22 is rigidly attached to a front motor planetary gearbox output flange 23 with a plurality of front motor gearbox output flange fasteners 24. The interface and connection of the front motor planetary gearbox input flange 22 with the front motor planetary gearbox output flange 23 could also be a threaded connection.

The nature of the engagement and fitting of the front motor output housing 15 with the front motor planetary gearbox input flange 22 is such that the front motor output housing 15 and the front motor planetary gearbox input flange 22 share a common interface received by the internal diameter of a front wheel hub inner bearing 20.

The front motor planet carrier 25 supports a front motor planet gear shaft 29 and a front motor planet gear 26 in a planetary gear arrangement to mesh with the front motor pinion 12 and the front motor planetary gearbox input flange 22 through a front motor planetary ring gear teeth component 31 such that output rotation speed of the front motor planet carrier 25 is reduced by a factor of between two and ten with respect to input rotation speed of the front motor pinion 12.

The nature of the material of the front motor planet gear 26 is preferably plastic or of a low noise composite material. The nature of the material of the front motor pinion 12 is ideally metal such as stainless steel. The nature of the material of the front motor planetary gearbox input flange 22 could be ferrous metal or stainless steel metal or metal alloy. The nature of construction and material of the front motor planetary ring gear teeth component 31 could be of a number of different varieties such as the front motor planetary ring gear teeth component 31 being an integral part and similar material as the front motor planetary gearbox input flange 22 and constructed through gear hobbing processes, or the front motor planetary ring gear teeth component 31 could be of different material to the front motor planetary gearbox input flange 22, such as plastic, and constructed and attached to the front motor planetary gearbox input flange 22 through over moulding and keyed injection moulding connection.

The front motor planet carrier 25 is further rotatably supported by a front motor planet carrier outer bearing 28 which is housed within the front motor planetary gearbox output flange 23. The front motor planet carrier 25 is rotatably connected to a front wheel hub outer 18 by a front motor one way clutch 30, for example a one way sprag type clutch, such that rotation of the front wheel hub outer 18 around the front wheel rotation axis 7 is only possible in one direction with respect to the front motor planet carrier 25.

The front single side wheel assembly 4 is rigidly mounted on one side to the front wheel hub outer 18 with a front wheel assembly fastener 8. The front wheel hub outer 18 is rotatably mounted to the front motor planetary gearbox output flange 23 with a front wheel hub outer bearing 21 and rigidly connected to a front wheel hub inner 17 with a front disk rotor fastener 19 passing through the front wheel disk brake rotor 5.

The front wheel hub inner 17 is rotatably mounted to the front motor output housing 15 and the front motor planetary gearbox input flange 22 by the front wheel hub inner bearing 20. The front wheel brake calliper 6 is arranged around the front wheel disk brake rotor 5 in a well-known fashion in order to provide braking force to the front single side wheel assembly 4.

As illustrated in Figure 3, the position of the front wheel hub inner bearing 20 is generally to one side of the front motor planet gear 26 and to one side of the front motor stator 10 and the front motor magnet rotary 11, such that the front wheel hub inner bearing 20 is positioned laterally between the between the electric motor and the planetary gear system with at least a part of the electric motor on one side, for example the front motor stator 10, and at least part of the planetary gear system on the other side, for example the planetary front motor planet gears 26 or the front motor planet carrier 25.

The front wheel hub inner bearing 20 is coaxial to the front wheel rotation axis 7 and is positioned in the region between the planetary gear system and the front motor stator 10 and front motor magnet rotary 11, such that the inner diameter of the front wheel hub inner bearing 20 is less than the respective outer diameters of the front motor stator 10 and the front motor planetary gearbox input flange 22. In other words, the wheel hub inner bearing 20 is axially located between the front motor stator 10 and the front motor planet gears 26, and radially located within the respective circumferences defined by the radially outer surfaces of the front motor stator 10 and the front motor planetary gearbox input flange 22.

Compared to known arrangements, which instead have a rotary bearing positioned around an outer circumference of a front motor planetary gearbox input flange (i.e. radially superior to the front motor planetary gearbox input flange and substantially aligned with the front motor planetary gearbox input flange in an axial direction), positioning the front wheel hub inner bearing 20 in the region between the planetary gear system and the motor components has the above-mentioned benefits of facilitating the use of reasonably sized hub bearings whilst still allowing a sufficiently large diameter planetary gearbox design able to use quiet plastic gearing, and also has the benefit of increasing the distance between the front wheel hub bearings to provide a more optimal spacing.

Although the above description is given in relation to a pedal-driven bicycle with a front side mounted motor-driven wheel, alternative embodiments are envisaged in which the same motor assembly is used in other vehicles. For example, the motor assembly could be used in one or more of a non-pedal driven cycle, as a motor for a rear side mounted motor driven wheel, or as a motor for a side mounted front or rear wheel on an electric scooter, such as a small motorcycle (also referred to as a moped) that may have a drive system built into a rear suspension swing-arm.

## Claims

1. A drive system for a side mounted cycle wheel, comprising:
a rotary wheel hub (24) for mounting the side mounted wheel;
a motor drive for driving the side mounted wheel, the motor drive comprising an electric motor (10,11) and a planetary gear reduction assembly (25,26,31) positioned at least partially within the rotary wheel hub (24) and comprising one or more planetary gears (26) and a rotatable planet carrier (25); and,
a rotary wheel hub bearing (20) rotatably coupling the rotary wheel hub to the motor drive,
wherein the rotary wheel hub bearing (20) is positioned laterally between the electric motor and the planetary gears; and,
wherein the rotary wheel hub (24) is connected to the planet carrier by a one way clutch (30) such that rotation of the rotary wheel hub with respect to the planet carrier is only possible in one direction.

2. The drive system of any preceding claim, wherein the rotary wheel hub bearing is coaxial with a wheel rotation axis of the side mounted wheel.

3. The drive system of any preceding claim, wherein an inner diameter of the rotary wheel hub bearing is smaller than an outer diameter of a stator of the electric motor.

4. The drive system of any preceding claim, wherein an inner diameter of the rotary wheel hub bearing is smaller than an outer diameter of the planetary gear reduction assembly.

5. The drive system of any preceding claim, wherein an inner diameter of the rotary wheel hub bearing is smaller than an outer diameter a planetary input flange of the planetary gear reduction assembly.

6. The drive system of any preceding claim, wherein the motor drive further comprises a planetary input flange (22) and a motor output flange coaxial with a wheel rotation axis of the side mounted wheel, and wherein the planetary input flange and the motor output flange share a common interface with the internal surface of the rotary wheel hub bearing.

7. The drive system of any preceding claim, wherein the rotary wheel hub bearing is a first rotary wheel hub bearing, and wherein the drive system further comprises a second rotary wheel hub bearing rotatably coupling the wheel hub to the motor drive.

8. The drive system of claim 7, wherein the second rotary wheel hub bearing is positioned on an opposing side of the planetary gear reduction assembly to the first rotary wheel hub bearing.

9. A cycle comprising:
a side mounted wheel mounted to the wheel hub of the drive system of any preceding claim.

10. The cycle of claim 9, wherein the side mounted wheel is a front side mounted wheel.

11. The cycle of claim 10, wherein the side mounted wheel is a rear side mounted wheel.

12. The cycle of any of claims 9 to 11, wherein the cycle is a pedal driven cycle.

## Patentansprüche

1. Antriebssystem für ein seitlich montiertes Fahrradrad, umfassend:
eine drehbare Radnabe (24) zur Befestigung des seit-lich angebrachten Rades;
einen Motorantrieb zum Antreiben des seitlich angebrachten Rades, wobei der Motorantrieb einen Elektromotor (10, 11) und eine Planetengetriebeuntersetzungsbaugruppe (25, 26, 31) umfasst, die mindestens teilweise innerhalb der drehbaren Radnabe (24) angeordnet ist und ein oder mehrere Planetengetriebe (26) und einen drehbaren Planetenträger (25) umfasst; und,
ein drehbares Radnabenlager (20), das die drehbare Radnabe drehbar mit dem Motorantrieb verbindet,
wobei das drehbare Radnabenlager (20) seitlich zwischen dem Elektromotor und den Planetengetrieben angeordnet ist; und,
wobei die drehbare Radnabe (24) mit dem Planetenträger durch eine Einwegkupplung (30) verbunden ist, so dass eine Drehung der drehbaren Radnabe gegenüber dem Planetenträger nur in einer Richtung möglich ist.

2. Antriebssystem nach einem der vorstehenden Ansprüche, wobei das drehbare Radnabenlager koaxial zu einer Raddrehachse des seitlich montierten Rades ist.

3. Antriebssystem nach einem der vorstehenden Ansprüche, wobei der Innendurchmesser des drehbaren Radnabenlagers kleiner ist als der Außendurchmesser des Stators des Elektromotors.

4. Antriebssystem nach einem der vorstehenden Ansprüche, wobei der Innendurchmesser des drehbaren Radnabenlagers kleiner ist als der Außendurchmesser der Planetengetriebeuntersetzungsbaugruppe.

5. Antriebssystem nach einem der vorstehenden Ansprüche, wobei der Innendurchmesser des drehbaren Radnabenlagers kleiner ist als der Außendurchmesser des Planeteneingangsflansches der Planetengetriebeuntersetzungsbaugruppe.

6. Antriebssystem nach einem der vorstehenden Ansprüche, wobei der Motorantrieb weiter einen Planeteneingangsflansch (22) und einen Motorabgangsflansch umfasst, die koaxial zu einer Raddrehachse des seitlich montierten Rades sind, und wobei der Planeteneingangsflansch und der Motorabgangsflansch eine gemeinsame Schnittstelle mit der Innenfläche des drehbaren Radnabenlagers haben.

7. Antriebssystem nach einem der vorstehenden Ansprüche, wobei das drehbare Radnabenlager ein erstes drehbares Radnabenlager ist, und wobei das Antriebssystem weiter ein zweites drehbares Radnabenlager umfasst, das die Radnabe drehbar mit dem Motorantrieb verbindet.

8. Antriebssystem nach Anspruch 7, wobei das zweite drehbare Radnabenlager auf einer dem ersten drehbaren Radnabenlager gegenüberliegenden Seite der Planetengetriebeuntersetzungsbaugruppe angeordnet ist.

9. Fahrrad, umfassend:
ein seitlich montiertes Rad, das an der Radnabe des Antriebssystems nach einem der vorstehenden Ansprüche befestigt ist.

10. Fahrrad nach Anspruch 9, wobei das seitlich montierte Rad ein vorderes, seitlich montiertes Rad ist.

11. Fahrrad nach Anspruch 10, wobei das seitlich montierte Rad ein hinteres, seitlich montiertes Rad ist.

12. Fahrrad nach einem der Ansprüche 9 bis 11, wobei das Fahrrad ein pedalbetriebenes Fahrrad ist.

## Revendications

1. Système d'entraînement pour une roue de cycle montée latéralement, comprenant :
un moyeu de roue rotative (24) pour monter la roue montée latéralement ;
un entraînement par moteur pour entraîner la roue montée latéralement, l'entraînement par moteur comprenant un moteur électrique (10, 11) et un ensemble réducteur à engrenage planétaire (25, 26, 31) positionné au moins partiellement à l'intérieur du moyeu de roue rotative (24) et comprenant un ou plusieurs engrenages planétaires (26) et un porte-satellites rotatif (25) ; et,
un roulement de moyeu de roue rotative (20) couplant de manière rotative le moyeu de roue rotative à l'entraînement par moteur, dans lequel le roulement de moyeu de roue rotative (20) est positionné latéralement entre le moteur électrique et les engrenages planétaires ;
et dans lequel le moyeu de roue rotative (24) est relié au porte-satellites par un embrayage unidirectionnel (30) de telle sorte que la rotation du moyeu de roue rotative par rapport au porte-satellites n'est possible que dans une seule direction.

2. Système d'entraînement selon une quelconque revendication précédente, dans lequel le roulement de moyeu de roue rotative est coaxial à un axe de rotation de roue de la roue montée latéralement.

3. Système d'entraînement selon une quelconque revendication précédente, dans lequel un diamètre intérieur du roulement de moyeu de roue rotative est plus petit qu'un diamètre extérieur d'un stator du moteur électrique.

4. Système d'entraînement selon une quelconque revendication précédente, dans lequel un diamètre intérieur du roulement de moyeu de roue rotative est plus petit qu'un diamètre extérieur de l'ensemble de réduction à engrenage planétaire.

5. Système d'entraînement selon une quelconque revendication précédente, dans lequel un diamètre intérieur du roulement de moyeu de roue rotative est plus petit qu'un diamètre extérieur d'une bride d'entrée planétaire de l'ensemble de réduction à engrenage planétaire.

6. Système d'entraînement selon une quelconque revendication précédente, dans lequel l'entraînement par moteur comprend en outre une bride d'entrée planétaire (22) et une bride de sortie de moteur coaxiale à un axe de rotation de la roue montée latéralement, et dans lequel la bride d'entrée planétaire et la bride de sortie du moteur partagent une interface commune avec la surface interne du roulement de moyeu de roue rotative.

7. Système d'entraînement selon une quelconque revendication précédente, dans lequel le roulement de moyeu de roue rotative est un premier roulement de moyeu de roue rotative, et dans lequel le système d'entraînement comprend en outre un second roulement de moyeu de roue rotative couplant de manière rotative le moyeu de roue à l'entraînement par moteur.

8. Système d'entraînement selon la revendication 7, dans lequel le second roulement de moyeu de roue rotative est positionné sur un côté opposé de l'ensemble de réduction à engrenage planétaire par rapport au premier roulement de moyeu de roue rotative.

9. Cycle comprenant :
une roue montée latéralement sur le moyeu de roue du système d'entraînement selon une quelconque revendication précédente.

10. Cycle selon la revendication 9, dans lequel la roue montée latéralement est une roue avant montée latéralement.

11. Cycle selon la revendication 10, dans lequel la roue montée latéralement est une roue arrière montée latéralement.

12. Cycle selon l'une quelconque des revendications 9 à 11, dans lequel le cycle est un cycle entraîné par pédale.
